(19) Europäisches Patentamt
European Patent Office
Office européen des brevets

(11) **EP 3 279 611 A1**

(12) **EUROPEAN PATENT APPLICATION**
published in accordance with Art. 153(4) EPC

(43) Date of publication:
07.02.2018  Bulletin 2018/06

(51) Int Cl.:
*G01C 21/28* (2006.01)     *G06T 1/00* (2006.01)
*G08G 1/0969* (2006.01)

(21) Application number: 16765066.2

(22) Date of filing: 17.03.2016

(86) International application number:
PCT/JP2016/058501

(87) International publication number:
WO 2016/148237 (22.09.2016 Gazette 2016/38)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 19.03.2015 JP 2015056157

(71) Applicant: **Clarion Co., Ltd.**
**Saitama-shi, Saitama 330-0081 (JP)**

(72) Inventor: **SUMIZAWA, Akio**
**Saitama-shi**
**Saitama 330-0081 (JP)**

(74) Representative: **Weickmann & Weickmann**
**PartmbB**
**Postfach 860 820**
**81635 München (DE)**

(54) **INFORMATION PROCESSING DEVICE, AND VEHICLE POSITION DETECTING METHOD**

(57)    To calculate a position of a vehicle on a road with a higher accuracy. An in-vehicle navigation device 1 is provided with a control portion 10 acquiring photographed image data obtained by photographing an outside of the vehicle, calculating, when object image data that is image data of a road sign is included in the photographed image data, a relative position of the vehicle relative to the road sign on the basis of the object image data, and detecting a position of the vehicle on a road on the basis of the calculated relative position.

FIG.1

**Description**

Technical Field

The present invention relates to a technique for detecting a position of a vehicle.

Background Art

As background art of the present technical field, Patent Literature 1 recites: "by detecting a current location of a vehicle using dead reckoning navigation to manage current location information about the vehicle, integrating an amount of movement in left and right directions using the dead reckoning navigation, and comparing the amount of movement with a lane width of a road to detect lane movement of the current location information, a current location of the vehicle is detected using the dead reckoning navigation by current location detecting means, and by detecting lane movement by lane movement detecting means to manage the current location information about the vehicle including a lane position by current location information managing means."

Citation List

Patent Literature

Patent Literature 1

Japanese Patent Laid-Open No. 2006-189325

Summary of Invention

Technical Problem

The technique described in Patent Literature 1, however, has a problem that, since a current position of a vehicle is detected by using an integrated amount of movement of the vehicle, an error between the detected position of the vehicle and an actual position of the vehicle increases when a vehicle traveling distance increases.
The present invention has been made in view of the situation described above, and an object is to calculate a position of a vehicle on a road with a higher accuracy.

Solution to Problem

In order to achieve the above object, the present invention is an information processing device mounted in a vehicle, characterized by comprising a control portion acquiring photographed image data obtained by photographing an outside of the vehicle, calculating, when object image data that is image data of a predetermined object is included in the photographed image data, a relative position of the vehicle relative to the object on the basis of the object image data, and detecting a position of the vehicle on a road on the basis of the calculated relative position.
Further, the information processing device of the present invention is characterized in that the control portion judges whether the object image data is included in the photographed image data or not on the basis of a result of comparison between stored image data corresponding to the object image data and the photographed image data.
Further, the information processing device of the present invention is characterized by comprising a storage portion storing road information including information showing a position of the object and information showing a relationship between the object and a road; wherein the control portion calculates the position of the vehicle on the road on the basis of the calculated relative position and the road information stored in the storage portion.
Further, the information processing device of the present invention is characterized in that the control portion calculates a right angle direction separation distance that is a separation distance between the vehicle and the object in a direction crossing a traveling direction of the vehicle, as the relative position, and calculates the position of the vehicle on the road on the basis of the calculated right angle direction separation distance and the road information stored in the storage portion.
Further, the information processing device of the present invention is characterized in that the road information includes information about widths of lanes that the road has and information about a separation distance between the object and the road; and the control portion identifies a lane in which the vehicle is traveling on the basis of the calculated right angle direction separation distance and the road information stored in the storage portion.
Further, the information processing device of the present invention is characterized in that the object includes a road sign.

Further, the information processing device of the present invention is characterized by comprising an interface to which a photographing device having a photographing function is connectable; wherein the control portion receives and acquires the photographed image data from the photographing device via the interface.

In order to achieve the above object, a vehicle position detecting method of the present invention is characterized by comprising: acquiring photographed image data obtained by photographing an outside of a vehicle, by a control portion; when object image data that is image data of a predetermined object is included in the photographed image data, calculating a relative position of the vehicle relative to the object on the basis of the object image data, by the control portion; and detecting a position of the vehicle on a road on the basis of the calculated relative position, by the control portion.

Further, the vehicle position detecting method of the present invention is characterized by comprising: storing image data corresponding to the object image data; and judging whether the object image data is included in the photographed image data or not on the basis of a result of comparison between stored image data corresponding to the object image data and the photographed image data.

Further, the vehicle position detecting method of the present invention is characterized by comprising calculating the position of the vehicle on the road on the basis of the calculated relative position and road information including information showing a position of the object and information showing a relationship between the object and the road.

Further, the vehicle position detecting method of the present invention is characterized by comprising: calculating a right angle direction separation distance that is a separation distance between the vehicle and the object in a direction crossing a traveling direction of the vehicle, as the relative position; and calculating the position of the vehicle on the road on the basis of the calculated right angle direction separation distance and the road information stored in the storage portion.

Further, the vehicle position detecting method of the present invention is characterized by comprising: identifying a lane in which the vehicle is traveling on the basis of the calculated right angle direction separation distance and the road information including information about widths of lanes that the road and information about a separation distance between the object and the road.

Further, in order to achieve the above object, the present invention is an information processing device communicably connected to an in-vehicle device mounted in a vehicle via a network, the information processing device being characterized by comprising a control portion acquiring photographed image data obtained by photographing an outside of the vehicle, from the in-vehicle device, calculating, when object image data that is image data of a predetermined object is included in the photographed image data, a relative position of the vehicle relative to the object on the basis of the object image data, detecting a position of the vehicle on a road on the basis of the calculated relative position and notifying the in-vehicle device of a detection result.

Advantageous Effect of Invention

According to the present invention, it is possible to calculate a position of a vehicle on a road with a higher accuracy.

Brief Description of Drawings

[Figure 1] Figure 1 is a block diagram showing a functional configuration of an in-vehicle navigation device according to a first embodiment.
[Figure 2] Figure 2 is a diagram showing a relationship among a travel lane, a vehicle and a road sign.
[Figure 3] Figure 3 is a flowchart showing operation of the in-vehicle navigation device.
[Figure 4] Figure 4 is a diagram showing an example of photographed image data.
[Figure 5] Figure 5 is a diagram showing a data structure of road information data.
[Figure 6] Figure 6 is a flowchart showing operation of an in-vehicle navigation device according to a second embodiment.
[Figure 7] Figure 7 is a diagram showing a relationship among a travel lane, a vehicle and a road sign.
[Figure 8] Figure 8 is a flowchart showing operation of an in-vehicle navigation device according to a third embodiment.
[Figure 9] Figure 9 is a diagram showing a relationship among a travel lane, a vehicle and a road sign.
[Figure 10] Figure 10 is a diagram showing a configuration of a vehicle position detection system according to a fourth embodiment.

Description of Embodiments

Embodiments of the present invention will be described below with reference to drawings.

<First embodiment>

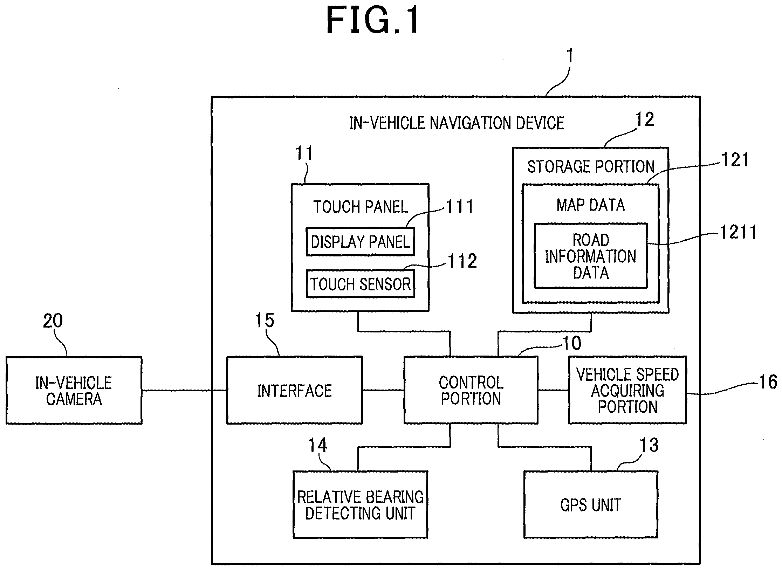

Figure 1 is a block diagram showing a functional configuration of an in-vehicle navigation device 1 (an information processing device) according to a first embodiment.

The in-vehicle navigation device 1 is a device mounted in a vehicle and is provided with a function of performing own vehicle position detection of detecting a current position of the vehicle, a function of displaying a map and performing map display of displaying the current position of the vehicle on a displayed map, a function of performing route search of searching for a route to a destination, and a function of performing route guidance of displaying a map, displaying a route to a destination on the map and guiding a route to the destination.

Hereinafter, a vehicle mounted with the in-vehicle navigation device 1 will be expressed as an "own vehicle".

As shown in Figure 1, the in-vehicle navigation device 1 is provided with a control portion 10, a touch panel 11, a storage portion 12, a GPS unit 13, a relative bearing detecting unit 14, an interface 15 and a vehicle speed acquiring portion 16.

The control portion 10 is provided with a CPU, a ROM, a RAM, other peripheral circuits and the like and controls each portion of the in-vehicle navigation device 1. The control portion 10 controls each portion of the in-vehicle navigation device 1 by cooperation between hardware and software, for example, the CPU reading and executing a control program stored in the ROM.

The touch panel 11 is provided with a display panel 111 and a touch sensor 112. The display panel 111 is provided with a display device such as a liquid crystal display panel and an organic EL panel and displays various images in accordance with control of the control portion 10. The touch sensor 112 is arranged being overlapped on the display panel 111, and the touch sensor 112 detects a user's touch operation and outputs a signal indicating the touch operation to the control portion 10. The control portion 10 executes a process corresponding to the user's touch operation on the basis of the signal inputted from the touch sensor 112.

The storage portion 12 is provided with a nonvolatile memory and stores various data.

The storage portion 12 stores map data 121.

The map data 121 includes parcel data. The parcel data is data used in the map display and route guidance described above, and includes depiction data for display of a map such as road depiction data for depiction of shapes of roads, background depiction data for depiction of backgrounds such as landforms, and character string depiction data for depiction of character strings for administrative districts and the like. The road depiction data further includes node information having information about nodes corresponding to connection points in a road network, such as intersections, link information having information about links corresponding to roads formed among nodes, and information required for the route guidance.

Further, the map data 121 includes region data. The region data is data used in the route search described above, and includes information required for the route search, such as the node information having information about nodes corresponding to connection points in a road network, such as intersections, and the link information having information about links corresponding to roads formed among nodes.

Further, the map data 121 includes road information data 1211. The road information data 1211 will be described later.

The GPS unit 13 receives a GPS radio wave from a GPS satellite via a GPS antenna not shown and acquires a current position and a traveling direction of the own vehicle from a GPS signal superimposed on the GPS radio wave by calculation. The GPS unit 13 outputs an acquisition result to the control portion 10.

The relative bearing detecting unit 14 is provided with a gyro sensor and an acceleration sensor. The gyro sensor is configured, for example, with a vibration gyro and detects a relative orientation of the own vehicle (for example, an amount of turning in a yaw axis direction). The acceleration sensor detects acceleration acting on the own vehicle (for example, inclination of the own vehicle relative to the traveling direction). The relative bearing detecting unit 14 outputs detection results of the gyro sensor and the acceleration sensor to the control portion 10.

The vehicle speed acquiring portion 16 is connected, for example, to a sensor for detecting a vehicle speed pulse, detects vehicle speed of the own vehicle on the basis of a vehicle speed pulse inputted from the sensor. Further, for example, by communicating with an ECU (Engine Control Unit), the vehicle speed acquiring portion 16 acquires information about vehicle speed from the ECU to detect the vehicle speed of the own vehicle. The vehicle speed acquiring portion 16 outputs a detection result to the control portion 10. The control portion 10 detects the vehicle speed of the own vehicle on the basis of the input from the vehicle speed acquiring portion 16.

In the case of performing the own vehicle position detection, the control portion 10 estimates a current position of the own vehicle on the basis of the inputs from the GPS unit 13 and the relative bearing detecting unit 14, the state of the own vehicle, such as the vehicle speed of the own vehicle detected on the basis of the input from the vehicle speed acquiring portion 16, and the map data 121, and appropriately corrects the estimated current position by a method to be described later to detect the current position of the own vehicle.

Further, in the case of performing the map display, the control portion 10 displays the detected current position of the own vehicle on a map displayed on the touch panel 11.

Further, in the case of performing the route search, the control portion 10 searches for a route from the detected current position to a destination set by the user on the basis of the map data 121.

Further, in the case of performing the route guidance, the control portion 10 displays the appeared current position of the own vehicle on the map while showing the route to the destination on the map to guide the route.

An external device is connected to the interface 15, and the interface 15 communicates with the connected external device in accordance with a predetermined protocol, in accordance with control of the control portion 10. In the present embodiment, an in-vehicle camera 20 (a photographing device) is connected to the interface 15 as the external device.

The in-vehicle camera 20 is a stereo camera having two photographing portions for photographing a forward direction of the own vehicle. Lens mechanisms of the two photographing portions are arranged being separated from each other in a left-right direction, which is a direction orthogonal to a front-back direction of the own vehicle, on the inner side of front glass of the own vehicle. The two photographing portions synchronously execute photographing in a predetermined cycle. The in-vehicle camera 20 generates two pieces of photographed image data on the basis of photographing results of the two photographing portions and outputs the generated two pieces of photographed image data to the control portion 10 via the interface 15.

By the way, as described above, the in-vehicle navigation device 1 according to the present embodiment has the function of performing the own vehicle position detection of detecting a current position of the own vehicle.

As for the own vehicle position detection, there is a need for detecting a current position of an own vehicle on a road where the own vehicle is traveling with as high accuracy as possible. Especially, as for the own vehicle position detection, there is a need for, in a case where a road on which an own vehicle is traveling has a plurality of lanes, detecting in which lane the own vehicle is traveling among the plurality of lanes with as high accuracy as possible. By detecting the lane in which the own vehicle is traveling (hereinafter referred to as a "traveling lane") with as high accuracy as possible, it is possible to accurately inform the user of the lane in which the own vehicle is traveling at the time of performing the map display and accurately inform the user of change of the lane for smoothly traveling on a retrieved route at the time of performing the route guidance, and, thereby, user convenience is improved.

On the basis of the above, the in-vehicle navigation device 1 detects a lane in which the own vehicle is traveling by the following method.

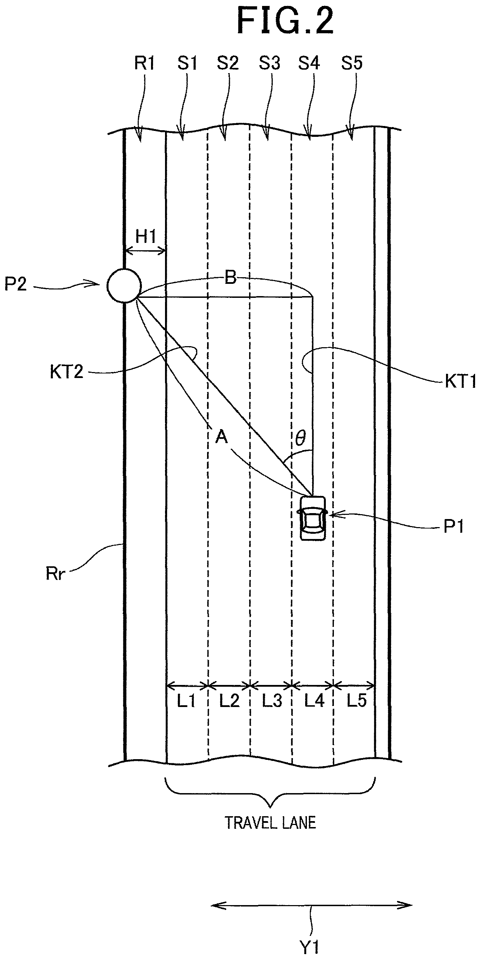

Figure 2 is a diagram showing an example of, when the own vehicle is traveling on a predetermined travel lane, a relationship among the travel lane, a position P1 which is a current position of the own vehicle, and a position P2 which is a position of a road sign (hereinafter referred to as "road sign") to be used for detection of a position of the own vehicle in a process to be described later.

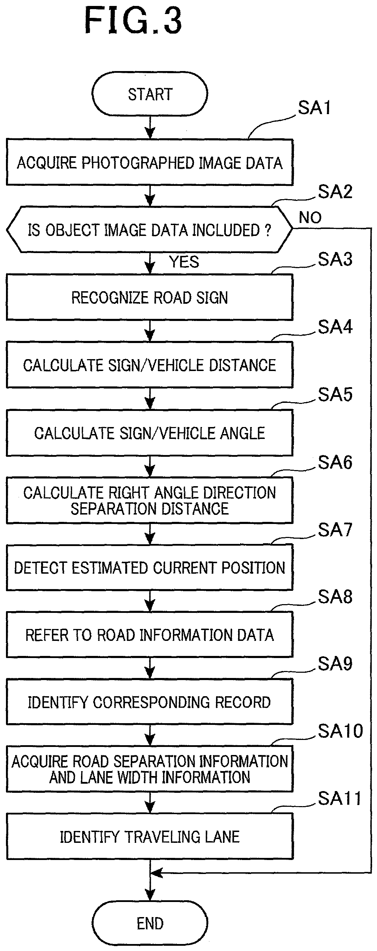

Further, Figure 3 is a flowchart showing operation of the in-vehicle navigation device 1 at the time of detecting a lane in which the own vehicle is traveling.

The process described below using the flowchart of Figure 3 is on the assumption that the shape of a travel lane is similar to the shape of the travel lane illustrated in Figure 2, and that a relationship among the travel lane, a current position of the own vehicle and a position of a road sign is similar to the relationship illustrated in Figure 2.

That is, it is assumed that the travel lane has a plurality of lanes (in the example of Figure 2, five lanes of a first lane S1 to a fifth lane S5).

Further, it is assumed that the travel lane linearly extends without bending at least up to the position of the road sign (in the example of Figure 2, the position P2) from the current position of the own vehicle (in the example of Figure 2, the position P1) in a traveling direction, that the number of lanes does not change, and that a width of each lane substantially does not change.

Further, it is assumed that, on the left side of the leftmost lane relative to the traveling direction (in the example of Figure 2, the first lane S1) among the lanes included in the travel lane, a side strip (in the example of Figure 2, a side strip R1) extends along the lane.

Further, it is assumed that the position of the road sign (in the example of Figure 2, the position P2) is a position in a diagonally left forward direction relative to the traveling direction from the position of the own vehicle (in the example of Figure 2, the position P1), which can be photographed by the in-vehicle camera 20 mounted in the own vehicle.

In the description below, a direction crossing the traveling direction of the own vehicle will be referred to as a "right angle direction" (in the example of Figure 2, a right angle direction Y1).

As shown in Figure 3, the control portion 10 of the in-vehicle navigation device 1 acquires photographed image data outputted by the in-vehicle camera 20 (step SA1).

As described above, the in-vehicle camera 20 synchronously photographs the forward direction of the own vehicle in a predetermined cycle by the two photographing portions and outputs the photographed image data based on a result of the photographing to the control portion 10. Therefore, the control portion 10 executes the processing of step SA1 in a cycle corresponding to the cycle of the in-vehicle camera 20 outputting the photographed image data, and executes the pieces of processing at and after step SA2 with execution of the processing of step SA1 (acquisition of the photographed image data) as a trigger.

Next, the control portion 10 analyzes the photographed image data acquired at step SA1, and judges whether object image data, which is image data of an image of a road sign showing maximum speed ( speed limit, regulatory speed) (hereinafter, referred to as a "maximum speed road sign"), is included in the photographed image data or not (step SA2). The processing of step SA2 will be described below in detail.

The control portion 10 executes the processing of step SA2 using any one of the pieces of photographed image data that are synchronously inputted from the two stereo cameras.

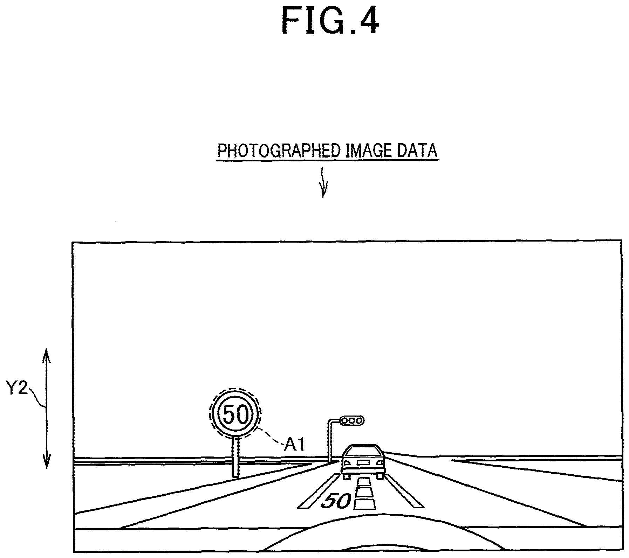

Figure 4 is a diagram schematically showing an example of the photographed image data in an aspect suitable for description.

In the present embodiment, the photographed image data is image data in which dots having information about colors (for example, information about color components of each of RGB colors represented by gradation values of a predetermined gradation) are arranged in a form of a dot matrix according to predetermined resolution.

Here, the map data 121 has image data to be used as a template in pattern matching for each of maximum speed road signs for maximum speeds (hereinafter referred to as "template image data"). The template image data corresponds to "image data corresponding to stored object image data". At step SA2, the control portion 10 performs pattern matching using the template image data the map data 121 has, and judges whether object image data is included in the photographed image data or not.

In the example of Figure 4, an area A1 is image data of an image of a maximum speed road sign showing that the maximum speed is 50 km/h, and the image data corresponding to the area A1 corresponds to the object image data. Therefore, when acquiring the photographed image data of Figure 4 at step SA1, the control portion 10 judges that object image data is included in the photographed image data by pattern matching using template image data of a template of the image of the maximum speed road sign showing that the maximum speed is 50 km/h at step SA2.

At step SA2, in order to improve accuracy of the judgment about whether object image data is included in photographed image data or not and accuracy of calculation of a sign/vehicle distance to be described later, the control portion 10 may judge that object image data is included in photographed image data when the size of the object image data included in the photographed image data is equal to or larger than a predetermined threshold.

The method for judging whether object image data is included in photographed image data or not is not limited to the method using pattern matching but may be any method.

If it is judged at step SA2 that object image data is not included in the photographed image data (step SA2: NO), the control portion 10 ends the process.

If it is judged at step SA2 that object image data is included in the photographed image data (step SA2: YES), the control portion 10 recognizes a photographed road sign (the maximum speed road sign) on the basis of the object image data (step SA3).

Specifically, at step SA3, the control portion 10 analyzes the object image data and acquires the type of a road sign corresponding to the object image data. For example, the control portion 10 identifies a character string and a figure included in the road sign corresponding to the object image data. Here, for each type of road sign, the map data 121 has information associating a character string and a figure included in the road sign with the type of the road sign. The control portion 10 acquires the type of the road sign corresponding to the identified character string and figure, on the basis of the information.

The method for identifying the type of a road sign is not limited to the method based on a character string and a figured included in the road sign but may be any method. For example, the method for identifying the type of a road sign may be a method of identifying the type of the road sign by reflecting the shape, color and the like of the road sign.

At the next step SA4, the control portion 10 calculates a separation distance between the road sign corresponding to the object image data and the own vehicle (hereinafter referred to as a "sign/vehicle distance"; in the example of Figure 2, a sign/vehicle distance A).

For example, the control portion 10 calculates the sign/vehicle distance by existing image processing utilizing a difference between positions of the pieces of object image data in the two pieces of photographed image data of the two photographing portions inputted from the in-vehicle camera 20 (a parallax).

The method for calculating the sign/vehicle distance is not limited to the exemplified method but may be any method. For example, the control portion 10 may calculate the sign/vehicle distance by predetermined means based on sizes of the pieces of object image data in the pieces of photographed image data.

At the next step SA5, the control portion 10 calculates an angle between a virtual straight line extending in the traveling direction of the own vehicle (in the example of Figure 2, a virtual straight line KT1) and a virtual straight line connecting the own vehicle and the road sign (in the example of Figure 2, a virtual straight line KT2) (hereinafter referred to as a "sign/vehicle angle"; in the example of Figure 2, an angle θ).

For example, the control portion 10 calculates the sign/vehicle angle by existing image processing based on the sign/vehicle distance calculated at step SA4, positions of the pieces of object image data in the two pieces of photographed image data of the two photographing portions inputted from the in-vehicle camera 20, and a direction of white lines indicating boundaries among lanes in the pieces of photographed image data.

The method for calculating the sign/vehicle angle is not limited to the exemplified method but may be any method.

At the next step SA6, the control portion 10 calculates a distance between a current position of the own vehicle (in the example of Figure 2, the position P1) and a position of a road sign (in the example of Figure 2, the position P2) in a right angle direction (in the example of Figure 4, the right angle direction Y1) (hereinafter referred to as a "right angle direction separation distance"; in the example of Figure 4, a right angle direction separation distance B). The processing of step SA6 will be described below in detail.

The control portion 10 calculates the right angle direction separation distance by the following formula M1 on the basis of the sign/vehicle distance calculated at step SA4 and the sign/vehicle angle calculated at step SA5.

$$\text{(Formula M1): Right angle direction separation}$$
$$\text{distance=Sign/vehicle distance} \bullet \sin \text{ (Sign/vehicle angle)}$$

Next, the control portion 10 detects a current position of the own vehicle on the basis of the inputs from the GPS unit 13, the relative bearing detecting unit 14 and the vehicle speed acquiring portion 16 (step SA7).

In the description below, the current position of the own vehicle detected on the basis of the inputs from the GPS unit 13 and the relative bearing detecting unit 14 will be expressed as an "estimated current position". Since the estimated current position is calculated using the input from the GPS unit 13, an error due to the GPS may occur, and it is not appropriate to detect a traveling lane on the basis of the estimated current position. Further, the estimated current position indicates a current position of the own vehicle by longitude and latitude.

Next, the control portion 10 refers to the road information data 1211 (step SA8).

The road information data 1211 is a database having a record for each of road signs displayed on a map based on the map data 121 (road signs managed in the map data 121).

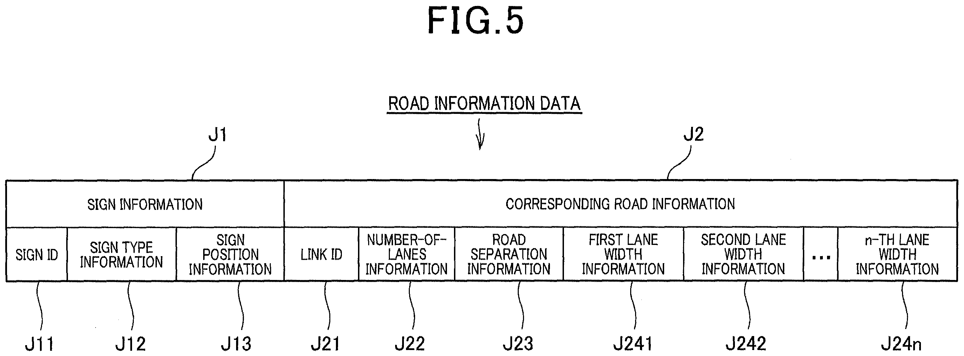

Figure 5 is a diagram showing a data structure of one record of the road information data 1211.

As shown in Figure 5, the one record of the road information data 1211 has sign information J1 and corresponding road information J2.

The sign information J1 is information about a road sign and has a sign ID J11 for uniquely identifying the road sign, sign type information J12 showing the type of the road sign, and sign position information J13 showing a position of the road sign (a position indicated by longitude and latitude).

The corresponding road information J2 is information about a road on which the road sign is provided. Note that the road on which the road sign is provided means a one-side road on which traveling in conformity with a rule shown by the road sign is required.

The corresponding road information J2 has a link ID J21 of the road (identification information assigned for each link in the link information of the region data or parcel data described above), number-of-lanes information J22 showing the number of lanes of the road, road separation information J23 showing a separation distance between the left end of the leftmost lane in the traveling direction among lanes of the road on which the road sign is provided and the position of the road sign (hereinafter referred to as a "sign/road separation distance). Further, the corresponding road information J2 has first lane width information J241 to n-th lane width information J24n showing widths of the lane for n lanes (n is an integer equal to or larger than "1") that the road has, respectively. In the description below, the n lanes are expressed as a first lane, a second lane, ..., an n-th lane in order from the leftmost lane in the traveling direction.

Information that each record of the road information data 1211 has corresponds to "road information".

Further, the road separation information J23 corresponds to "information about a separation distance between an object and a road".

At the next step SA9, the control portion 10 identifies a record of a road sign corresponding to the object image data among the records that the road information data 1211 has. The processing of step SA9 will be described below in detail.

At step SA9, the control portion 10 extracts a record in which a position shown by the sign position information J13 of the road information data 1211 and the estimated current position detected at step SA7 are in a predetermined relationship, among the records that the road information data 1211 has.

That the position shown by the sign position information J13 of the road information data 1211 and the estimated current position detected at step SA7 are in a predetermined relationship means that the position shown by the sign position information J13 is within a photographing range of the in-vehicle camera 20 with the estimated current position as a starting point.

When one record is extracted, the control portion 10 identifies the extracted record as the record of the road sign corresponding to the object image data.

On the other hand, a case may occur where a plurality of records are extracted. In this case, the control portion 10 identifies such a record that the type of a road sign shown by the sign type information J12 corresponds to the type of the road sign corresponding to the object image data acquired at step SA3, among the extracted plurality of records, as the record of the road sign corresponding to the object image data.

Here, in general, road signs of the same type are arranged being separated by a predetermined distance or more. Therefore, by identifying a corresponding record by the above method, it is possible to appropriately identify a record of a road sign corresponding to object image data.

At the next step SA10, the control portion 10 acquires road separation information J23 and first lane width information J241 to n-th lane width information J24n on the basis of the record identified at step SA9.

Next, the control portion 10 identifies a lane in which the own vehicle is traveling (a traveling lane) on the basis of the right angle direction separation distance calculated at step SA6, and the road separation information J23 and the first lane width information J241 to n-th lane width information J24n acquired at step SA10 (step SA11). The processing of step SA11 will be described below in detail.

Here, the lane in which the own vehicle is traveling can be identified by a relationship among the right angle direction separation distance, the sign/road separation distance and widths of the lanes that the road has.

That is, the right angle direction separation distance, the sign/road separation distance and the widths of the first lane to n-th lane that the road (the travel lane) has are in the following relationship: "Sign/road separation distance+Width of first lane+...+Width of (m-1)th lane<Right angle direction separation distance<Sign/road separation distance+Width of first lane+...+Width of m-th lane" (m is an integer equal to or larger than "1"). In this case, the lane in which the own vehicle is traveling (the traveling lane) is the m-th lane.

For example, in the case of Figure 2, a right angle direction separation distance C, a sign/road separation distance H1 and a width L1 to a width L5 of the first lane S1 to the fifth lane S5 that the road (the travel lane) has are in the following relationship: "Sign/road separation distance H1+Width L1+Width L2<Right angle direction separation distance C<Sign/road separation distance H1+Width L1+Width L2+Width L3". In this case, the lane in which the own vehicle is traveling is the third lane S3.

On the basis of the above, at step SA11, the control portion 10 identifies the lane in which the own vehicle is traveling (the traveling lane), on the basis of the relationship among the right angle direction separation distance, the sign/road separation distance and the width of each lane that the road has.

The operation of the in-vehicle navigation device 1 at the time of detecting (identifying) the lane in which the own vehicle is traveling has been described above.

Here, in the above description, the control portion 10 calculates a sign/vehicle angle, a sign/vehicle distance and a right angle direction separation distance.

If the sign/vehicle angle and the sign/vehicle distance are decided, a position of the own vehicle relative to a road sign is decided. Therefore, the sign/vehicle angle and the sign/vehicle distance correspond to a "relative position of an own vehicle (a vehicle) relative to a road sign (an object)".

Similarly, if the right angle direction separation distance is decided, a position of the own vehicle in a right angle direction relative to the road sign is decided. Therefore, the right angle direction separation distance corresponds to the "relative position of an own vehicle (a vehicle) relative to a road sign (an object)".

Further, in the embodiment described above, the control portion 10 detects a lane in which the own vehicle is traveling, using the calculated sign/vehicle angle, sign/vehicle distance and right angle direction separation distance. These relative positions, however, can be used in other methods at the time of detecting the own vehicle.

For example, the control portion 10 can detect a relative position of the own vehicle relative to a road sign based on the sign/vehicle angle and the sign/vehicle distance. Therefore, the control portion 10 can detect a position of the own vehicle on a map by acquiring a position of a road sign on the map. Then, for example, by correcting an estimated current position detected from an input from the GPS unit 13 or the like by the position of the own vehicle on the map detected on the basis of the sign/vehicle angle and sign/vehicle distance, the position of the own vehicle can be detected with a higher accuracy.

Further, though, in a self-driving system (including not only a complete self-driving system but also a system supporting self-driving in a predetermined case), it is required to detect a position of the own vehicle with a high accuracy, it is possible to detect the position of the own vehicle with a higher accuracy by using a calculated sign/vehicle angle, sign/vehicle distance and right angle direction separation distance at the time of detecting the position of the own vehicle.

As described above, the in-vehicle navigation device 1 (the information processing device) according to the present embodiment is provided with the control portion 10 that acquires photographed image data obtained by photographing an outside of the own vehicle (the vehicle), and, when object image data, which is image data of a road sign (a predetermined object), is included in the photographed image data, calculates a relative position of the vehicle relative to the road sign (a combination of a sign/vehicle angle and a sign/vehicle distance, or a right angle direction separation distance) on the basis of the object image data, and detects a position of the vehicle on a road on the basis of the calculated relative position.

According to this configuration, a relative position of the own vehicle relative to a road sign is calculated on the basis of object image data included in photographed image data, and a position of the own vehicle on the road is detected on the basis of the calculated relative position. Therefore, for example, in comparison with the case of detecting a current position of a vehicle using an integrated amount of movement of the vehicle, an error of position detection accompanying increase in a traveling distance of the vehicle does not occur, and it is possible to calculate a position of the vehicle on a road with a high accuracy.

Further, in the present embodiment, the in-vehicle navigation device 1 is provided with the storage portion 12 that stores the road information data 1211 having road information including information showing positions of road signs and information showing relationships between the road signs and roads.

The control portion 10 calculates a position of the own vehicle on a road on the basis of the calculated relative position (the combination of the sign/vehicle angle and the sign/vehicle distance, or the right angle direction separation distance) and the road information data 1211 stored in the storage portion 12.

According to this configuration, the control portion 10 can detect a position of the own vehicle on a road with a high accuracy on the basis of a calculated relative position using the road information that the road information data 1211 has.

Further, in the present embodiment, the control portion 10 calculates a right angle direction separation distance, which is a separation distance between the own vehicle and a road sign in the right angle direction (a direction crossing a traveling direction of the own vehicle) as the relative position, and calculates a position of the own vehicle on a road on the basis of the calculated right angle direction separation distance and the road information data 1211.

According to this configuration, the control portion 10 detects a position of the own vehicle on a road with a high accuracy on the basis of a calculated right angle direction separation distance using the road information that the road information data 1211 has.

Further, in the present embodiment, the road information of the road information data 1211 includes the first lane width information J241 to the n-th lane width information J24n (information about widths of lanes a road has) and the road separation information J23 (information about a separation distance between an object and a road).

The control portion 10 identifies a lane in which the own vehicle is traveling on the basis of the calculated right angle direction separation distance and the road information data 1211.

According to this configuration, a position of the own vehicle on a road is detected with a high accuracy on the basis of the calculated right angle direction separation distance using the road information that the road information data 1211 has.

<Second embodiment>

Next, a second embodiment will be described.

In the description below, the same components as the components described in the first embodiment will be given the same reference numerals, and detailed description thereof will be omitted.

Further, in the second embodiment, as for a shape of a travel lane and a relationship among the travel lane, a current position of the own vehicle and a position of a road sign, they are assumed to be similar to those according to the first embodiment.

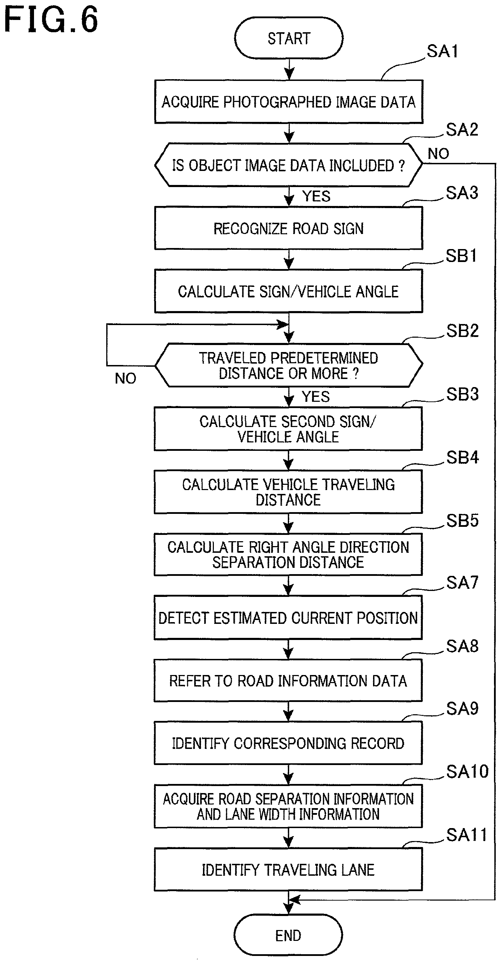

Figure 6 is a flowchart showing operation at the time of the in-vehicle navigation device 1 according to the present embodiment detecting a lane in which the own vehicle is traveling.

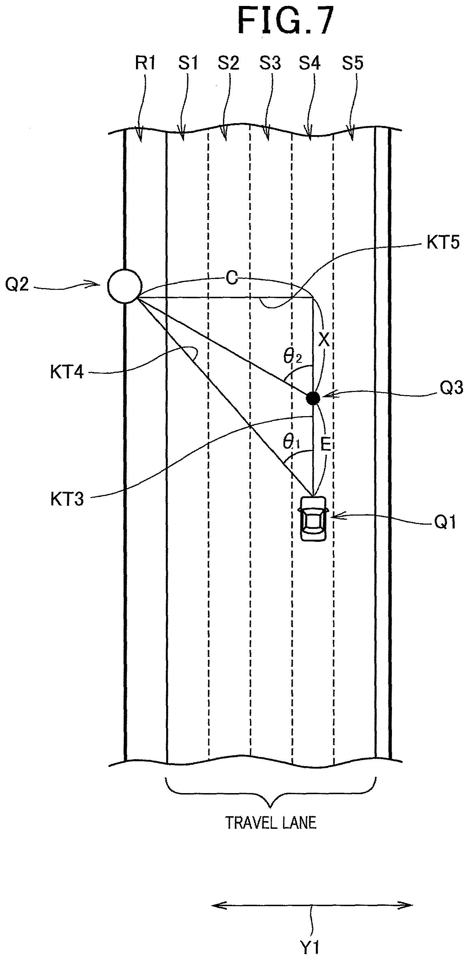

Figure 7 is a diagram showing a relationship among a travel lane, a position of a road sign and a position of the own vehicle to illustrate a process of the in-vehicle navigation device 1 according to the present embodiment.

As for the pieces of processing of steps SA4 to SA6 among the pieces of processing described using the flowchart of Figure 3 in the first embodiment, the in-vehicle device according to the present embodiment performs different pieces of processing. On the basis of this, steps at which the same pieces of processing as pieces of processing in Figure 3 are performed will be given the same reference signs in the flowchart of Figure 6, and description of the steps will be omitted. Pieces of processing of steps SB1 to SB5 performed instead of the pieces of processing of steps SA4 to SA6 in Figure 3 will be described below.

As shown in Figure 6, at step SB1, the control portion 10 calculates a sign/vehicle angle in a method similar to the method described in the first embodiment.

In the example of Figure 7, the position of the own vehicle at the timing of executing the processing of step SB1 is a position Q1; the position of the road sign is a position Q2; and the control portion 10 calculates an angle $\theta 1$ as the sign/vehicle angle at step SB1.

Next, the control portion 10 monitors whether or not the own vehicle has traveled a predetermined distance or more after the timing of executing the processing of step SB1 (step SB2). The detection of step SB2 about whether the own vehicle has traveled a predetermined distance or more does not have to be strict detection. For example, in a situation that there is a strong possibility that the own vehicle has traveled the predetermined distance or more, from a relationship between vehicle speed and traveling time, a judgment that the own vehicle has traveled the predetermined distance or more may be made.

If the own vehicle has traveled the predetermined distance or more after the timing of executing the processing of step SB1 (step SB2: YES), the control portion 10 calculates a second sign/vehicle angle based on a current position of the own vehicle at that time point (hereinafter referred to as a "second current position"; in the example of Figure 7, a position Q3) (step SB3).

The second sign/vehicle angle is an angle between a virtual straight line extending in a traveling direction of the own vehicle (in the example of Figure 7, a virtual straight line KT3) and a virtual straight line connecting the second current position of the own vehicle (in the example of Figure 7, the position Q3) and the position of the road sign (in the example of Figure 7, the position Q2) (in the example of Figure 2, a virtual straight line KT4). In the example of Figure 7, the second sign/vehicle angle is an angle θ2.

At step SB3, the control portion 10 calculates the second sign/vehicle angle in a method similar to the method for calculating a sign/vehicle angle described in the first embodiment.

Next, the control portion 10 calculates a distance between the position of the own vehicle at the timing of executing the processing of step SB1 (in the example of Figure 7, the position Q1) and the position of the own vehicle at the timing of executing the processing of step SB3 (in the example of Figure 7, the position Q3) (hereinafter referred to as a "vehicle traveling distance"; in the example of Figure 7, a vehicle traveling distance E) (step SB4).

At step SB4, for example, the control portion 10 detects an estimated current position of the own vehicle at the timing of executing the processing of step SB1 and an estimated current position of the own vehicle at the time of executing the processing of step SB3 on the basis of inputs from the GPS unit 13 and the relative bearing detecting unit 14, and appropriately performs correction on which the situation of vehicle speed during traveling and the like are reflected to calculate a vehicle traveling distance. Further, for example, the control portion 10 calculates the vehicle traveling distance on the basis of an aspect of a change between an image of a predetermined object (which may be a road sign) in photographed image data based on photographing performed by the in-vehicle camera 20 at the timing of executing the processing of step SB1 and an image of the predetermined object in photographed image data based on photographing performed by the in-vehicle camera 20 at the timing of executing the processing of step SB3.

The method for calculating the vehicle traveling distance is not limited to the exemplified method but may be any method.

Next, the control portion 10 calculates a right angle direction separation distance (in the example of Figure 7, a right angle direction separation distance C) on the basis of the sign/vehicle angle calculated at step SB1 (in the example of Figure 7, the angle θ1), the second sign/vehicle angle calculated at step SB3 (in the example of Figure 7, the angle θ2) and the vehicle traveling distance calculated at step SB4 (in the example of Figure 7, the vehicle traveling distance E) (step SB5).

Here, when a distance between the second current position (in the example of Figure 7, the position Q3) and an intersection point between a virtual straight line passing through the second current position and extending in the traveling direction of the own vehicle (in the example of Figure 7, the virtual straight line KT3) and a virtual straight line passing through the position of the road sign (in the example of Figure 7, the position Q2) and extending in a right angle direction (in the example of Figure 7, a virtual straight line KT5) is regarded as a "corresponding distance" (in the example of Figure 7, a corresponding distance x), the following formulas are satisfied.

```
(Formula M2): tan (Sign/vehicle angle)=Right angle
direction separation distance/(Vehicle traveling
distance+Corresponding distance)

(Formula M3): tan(Second sign/vehicle angle)=Right
angle direction separation distance/Corresponding
distance
```

Therefore, the right angle direction separation distance can be calculated by the following formula M4:

(Formula M4): Right angle direction separation distance=(Vehicle traveling distance•tan(Sign/vehicle angle)•tan(Second sign/vehicle angle))/(tan(Second sign/vehicle angle)-tan(Sign/vehicle angle))

On the basis of the above, the following formulas are satisfied in the case of the example of Figure 7:

(Formula M2'): $\tan\theta1$=Right angle direction separation distance C/(Vehicle traveling distance E+Corresponding distance x)

(Formula M3'): $\tan\theta2$=Right angle direction separation distance C/Corresponding distance x

The right angle direction separation distance C can be calculated by the following formula M4':

(Formula M4'): Right angle direction separation distance C=(Vehicle traveling distance E•$\tan\theta1$•$\tan\theta2$)/($\tan\theta2$-$\tan\theta1$)

At step SB5, the control portion 10 calculates the right angle direction separation distance using the formula M4 described above.

The operation performed at the time of the control portion 10 of the in-vehicle navigation device 1 according to the present embodiment detecting a position of the own vehicle (a lane in which the own vehicle is traveling) has been described above. By performing the process described in the present embodiment, it is possible to detect a position of the own vehicle with a higher accuracy similarly to the first embodiment.

Though calculation of angles with a current position of the own vehicle as a vertex (the sign/vehicle angle and the second sign/vehicle angle) is performed twice in the present embodiment, a configuration is also possible in which the calculation is executed three or more times according to travel of the own vehicle, and a relative position of the own vehicle relative to a road sign (the right angle direction separation distance) is calculated in a method corresponding to the method described above on the basis of each of the calculated angles. According to this configuration, it is possible to calculate the relative position with a higher accuracy.

Further, in the embodiment described above, the in-vehicle camera 20 photographs a forward direction of the own vehicle, and the control portion 10 calculates a relative position of the own vehicle relative to a road sign on the basis of photographed image data based on a result of the photographing of the forward direction of the own vehicle. On the other hand, if the in-vehicle camera 20 is provided at a position capable of photographing a side direction or backward direction of the own vehicle, the control portion 10 can calculate the relative position of the own vehicle relative to a road sign on the basis of photographed image data based on a result of the photographing of the side direction or backward direction of the own vehicle in the method described above.

<Third embodiment>

Next, a third embodiment will be described.

In the description below, the same components as the components described in the first embodiments will be the same reference numerals, and detailed description of the components will be omitted.

In the first and second embodiments described above, it is assumed that a road (a travel lane) does not bend at least from a current position of the own vehicle to a road sign. On the other hand, in the present embodiment, operation of the in-vehicle navigation device 1 when a road (a travel lane) from a current position of the own vehicle to a road sign bends will be described.

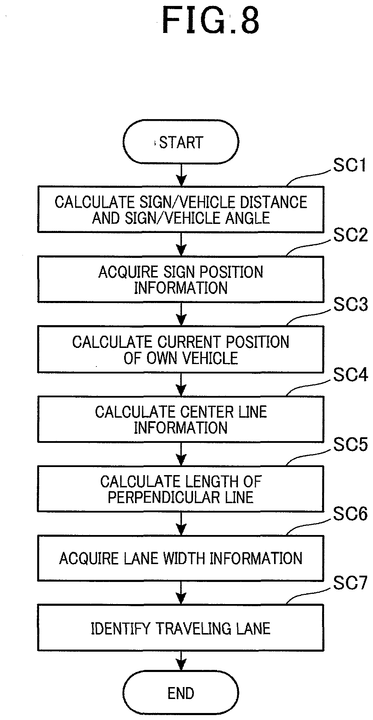

Figure 8 is a flowchart showing the operation of the in-vehicle navigation device 1 according to the present embodiment.

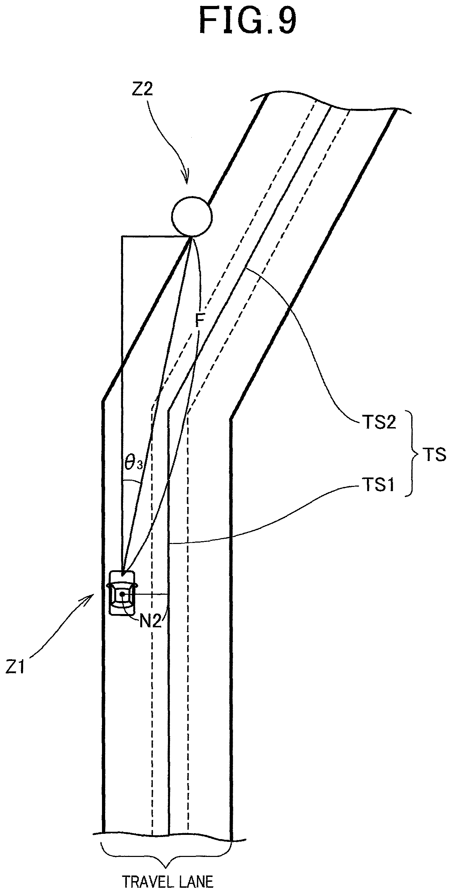

Figure 9 is a diagram showing an example of, when the own vehicle is traveling on a predetermined travel lane, a relationship among the travel lane, a position Z1 which is a current position of the own vehicle, and a position Z2 which is a position of a road sign used for detection of the position of the own vehicle.

The in-vehicle navigation device 1 executes the process of the flowchart shown in Figure 8 in the following case. That is, when object image data of an image of a road sign is included in photographed image data, the control portion 10 of the in-vehicle navigation device 1 judges whether the road between a current position of the own vehicle and a road sign bends or not by predetermined means. For example, the control portion 10 acquires link information about the road (the travel lane) on which the own vehicle is traveling, and judges whether the road between the current position of the own vehicle and the road sign bends or not on the basis of a relationship among the link information, the position of the own vehicle and the position of the road sign. The method for judging whether a road bends or not is not limited to the exemplified method but may be any method.

If judging that the road bends between the current position of the own vehicle and the road sign bends, the control portion 10 executes the process of the flowchart of Figure 8.

It is assumed that, at the starting point of the flowchart of Figure 8 below, the control portion 10 has executed the pieces of processing corresponding to steps SA1 and SA3 of the flowchart of Figure 3.

As shown in Figure 8, the control portion 10 of the in-vehicle navigation device 1 calculates a sign/vehicle distance (in the example of Figure 9, a sign/vehicle distance F) and a sign/vehicle angle (in the example of Figure 9, an angle $\theta3$) on the basis of object image data of an image of the road sign included in photographed image data in a method similar to the method described in the first embodiment (step SC1).

Next, the control portion 10 refers to the road information data 1211 to identify a record of a road sign corresponding to the aspect image data in a method similar to the method described in the first embodiment described above, and acquires sign position information J13 that the identified record has (step SC2). As described above, the sign position information J13 is information showing the position of the road sign (a position indicated by longitude and latitude; coordinates in a predetermined coordinate system on which a map based on the map data 121 is developed is also possible).

Next, the control portion 10 calculates a current position of the own vehicle (in the example of Figure 9, the position Z1) on the basis of a position of the road sign shown by the sign position information J13 acquired at step SC2 (in the example of Figure 9, the position Z2), the sign/vehicle distance calculated at step SC1 (in the example of Figure 9, the sign/vehicle distance F) and the sign/vehicle angle (in the example of Figure 9, $\theta3$) (step SC3) .

By the sign/vehicle distance and the sign/vehicle angle being decided, a relative position of the own vehicle relative to the road sign is decided. Therefore, by the position of the road sign being decided, the current position of the own vehicle is decided.

Next, the control portion 10 refers to the map data 121 to acquire information about a center line of the road (the travel lane) on which the own vehicle is traveling (hereinafter referred to as "center line information") (step SC4).

In the present embodiment, a center line of a road refers to a line following the center of a roadway in a right angle direction relative to the overall road width including travel lanes in opposite traveling directions, and is a center line TS in the example of Figure 9. In the map data 121, a center line on a map is managed as a set of straight lines along the center line (hereinafter referred to as "unit straight lines"). For example, in the example of Figure 9, the center line TS is managed as a unit straight line TS1 and a unit straight line TS2. For each of the unit straight lines, the map data 121 has unit straight line information including a position of one end on a map and a position of the other end on the map.

At step SC4, the control portion 10 acquires unit straight line information about a unit straight line positioned in a side direction of the position of the own vehicle (in the example of Figure 9, the unit straight line TS1) as the center line information.

Next, the control portion 10 calculates, in a case of drawing a perpendicular line down from the current position of the own vehicle to the unit straight line shown by the unit straight line information acquired at step SC4, a length between the current position of the own vehicle and an intersection point between the perpendicular line and the unit straight line (in the example of Figure 9, a length N2) (step SC5).

Next, the control portion 10 refers to the road information data 1211 to acquire first lane width information J241 to n-th lane width information J24n about the road on which the own vehicle is traveling (step SC6).

Next, the control portion 10 identifies a lane in which the own vehicle is traveling on the basis of the center line information (the unit straight line information) acquired at step SC4, the length of the perpendicular line calculated at step SC5 and the first lane width information J241 to the n-th lane width information J24n acquired at step SC6 (step SC7).

Here, on a road, lanes are provided side by side in a left direction relative to a traveling direction from a center line. Therefore, if a width of each lane provided on the road and a distance between the center line and a current position of the own vehicle are decided, a lane in which the own vehicle is positioned is decided.

On the basis of the above, at step SC7, the control portion 10 calculates a position of the intersection point between the perpendicular line and the center line on the map, and identifies the lane in which the own vehicle is traveling on the basis of a relationship among the position, the length of the perpendicular line and a width of the lane.

The operation performed at the time of the control portion 10 of the in-vehicle navigation device 1 according to the present embodiment detecting a position of the own vehicle (a lane in which the own vehicle is traveling) has been described above. By performing the process described in the present embodiment, it is possible to detect a position of the own vehicle with a higher accuracy similarly to the first and second embodiments.

<Fourth embodiment>

Next, a fourth embodiment will be described.

In the description below, the same components as the components described in the first embodiment will be given the same reference numerals, and detailed description thereof will be omitted.

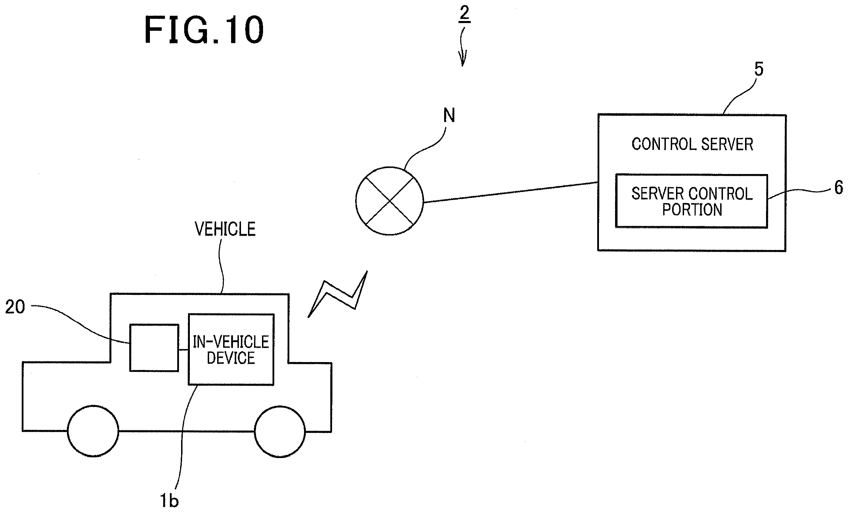

Figure 10 is a diagram showing a vehicle position detection system 2 according to the fourth embodiment.

In the first to third embodiments described above, a device mounted in a vehicle executes a process for detecting a current location of the own vehicle. On the other hand, in the present embodiment, a control server 3 communicable with the device mounted in a vehicle via a network N executes the process.

In the present embodiment, the control server 3 functions as an "information processing device".

As shown in Figure 10, an in-vehicle device 1b according to the present embodiment is mounted in a vehicle. The in-vehicle camera 20 is connected to the in-vehicle device 1b according to the embodiment.

The in-vehicle device 1b is communicably connected to the control server 3 via the network N that is configured including the Internet. A configuration is also possible in which the in-vehicle device 1b is provided with a function of accessing the network N, and the in-vehicle device 1b directly accesses the network N. A configuration is also possible in which the in-vehicle device 1b and a terminal having a function of accessing the network N (for example, a mobile phone that a person in the vehicle possesses) are connected via near-field wireless communication or wired communication, or other communication systems, and the in-vehicle device 1b accesses the network N via the terminal.

The in-vehicle device 1b has a function of transmitting photographed image data inputted from the in-vehicle camera 20 to the in-vehicle navigation device 1 via the network N.

The control server 5 is provided with a server control portion 6 that is provided with a CPU, a ROM, a RAM, other peripheral circuits and the like and controls each portion of the control server 5 by cooperation between hardware and software, for example, reading and executing a program.

The server control portion 6 functions as a "control portion".

The server control portion 6 receives photographed image data from the in-vehicle device 1b, performs the processes corresponding to the flowchart of Figure 3, 6 or 8 on the basis of the received photographed image data and detects a relative position of the own vehicle relative to a road sign. As for information required for the processes for the detection (for example, information corresponding to the estimated current position described above, information included in the road information data 1211 and the like), the control server 5 stores the information itself or acquires the information from the in-vehicle device 1b at an appropriate timing as required. The server control portion 6 appropriately notifies the in-vehicle device 1b of information showing the detected relative position of the own vehicle relative to the road sign as a detection result.

The in-vehicle device 1b executes a corresponding process on the basis of the notification from the control server 5.

The fourth embodiment has been described above. Even in configuration of the fourth embodiment, the in-vehicle device 1b mounted in a vehicle can acquire a relative position of the own vehicle relative to a road sign and execute a corresponding process on the basis of the acquired relative position.

The embodiments described above merely show aspects of the present invention and can be arbitrarily modified and applied within a scope of the present invention.

For example, in the embodiments described above, the in-vehicle navigation device 1 and the control server 5 detect a relative position of the own vehicle relative to a road sign as an object. The object, however, is not limited to a road sign but may be anything that can be photographed by the in-vehicle camera 20. For example, the object may be a signal, a building, a signboard or the like. However, since a road sign has a characteristic that a position where the road sign is provided is restricted to some extent because of a relationship with a road, a characteristic of being managed with the map data 121, and a characteristic that types are limited, and there is a shape standard for each of the types, the road sign is appropriate as an object.

Further, Figures 1 and 10 are schematic diagrams in which functional components of the in-vehicle navigation device 1 and the control server 5 are shown being classified according to main pieces of processing content in order to cause the invention of the present application to be easily understood, and in the components of these devices also can be classified into more components according to processing content. Further, classification is also possible in which one component can execute more processes. Further, a process of each component may be executed by one piece of hardware or may be executed by a plurality of pieces of hardware. Further, the process of each component may be realized by one program or may be realized by a plurality of programs.

Further, processing units of the flowcharts described using drawings are obtained by division according to main pieces of processing content to cause the processes of the in-vehicle navigation device 1 and the control server 5 to be easily understood. The invention of the present application is not restricted by the way of division of processing units and the names of the processing units. The process of each device can be divided into more processing units according to processing content. Further, one processing unit can be divided so as to include more pieces of processing. Further, processing orders of the above flowcharts are not limited to the shown examples if similar free state judgment can be performed.

Further, though the in-vehicle navigation device 1 is configured to acquire photographed image data from the in-vehicle camera 20 which is an external device in the embodiments described above, a configuration is also possible in which the in-vehicle navigation device 1 has a photographing function.


Reference Signs List

    1 in-vehicle navigation device (information processing device)
    5 control server (information processing device)
    6 server control portion (control portion)
    10 control portion
    12 storage portion
    15 interface
    20 in-vehicle camera (photographing device)


**Claims**

1.   An information processing device mounted in a vehicle, comprising a control portion acquiring photographed image data obtained by photographing an outside of the vehicle, calculating, when object image data that is image data of a predetermined object is included in the photographed image data, a relative position of the vehicle relative to the object on the basis of the object image data, and detecting a position of the vehicle on a road on the basis of the calculated relative position.

2.   The information processing device according to claim 1, wherein the control portion judges whether the object image data is included in the photographed image data or not on the basis of a result of comparison between stored image data corresponding to the object image data and the photographed image data.

3.   The information processing device according to claim 1 or 2, comprising a storage portion storing road information including information showing a position of the object and information showing a relationship between the object and a road; wherein
     the control portion calculates the position of the vehicle on the road on the basis of the calculated relative position and the road information stored in the storage portion.

4.   The information processing device according to claim 3, wherein the control portion calculates a right angle direction separation distance that is a separation distance between the vehicle and the object in a direction crossing a traveling direction of the vehicle, as the relative position, and calculates the position of the vehicle on the road on the basis of the calculated right angle direction separation distance and the road information stored in the storage portion.

5.   The information processing device according to claim 4, wherein
     the road information includes information about widths of lanes that the road has and information about a separation distance between the object and the road; and
     the control portion identifies a lane in which the vehicle is traveling on the basis of the calculated right angle direction separation distance and the road information stored in the storage portion.

**6.** The information processing device according to any one of claims 1 to 5, wherein the object includes a road sign.

**7.** The information processing device according to any one of claims 1 to 6, comprising an interface to which a photographing device having a photographing function is connectable; wherein
the control portion receives and acquires the photographed image data from the photographing device via the interface.

**8.** A vehicle position detecting method comprising:

acquiring photographed image data obtained by photographing an outside of a vehicle, by a control portion;
when object image data that is image data of a predetermined object is included in the photographed image data, calculating a relative position of the vehicle relative to the object on the basis of the object image data, by the control portion; and
detecting a position of the vehicle on a road on the basis of the calculated relative position, by the control portion.

**9.** The vehicle position detecting method according to claim 8, comprising:

storing image data corresponding to the object image data; and
judging whether the object image data is included in the photographed image data or not on the basis of a result of comparison between stored image data corresponding to the object image data and the photographed image data.

**10.** The vehicle position detecting method according to claim 8 or 9, comprising calculating the position of the vehicle on the road on the basis of the calculated relative position and road information including information showing a position of the object and information showing a relationship between the object and the road.

**11.** The vehicle position detecting method according to claim 10, comprising:

calculating a right angle direction separation distance that is a separation distance between the vehicle and the object in a direction crossing a traveling direction of the vehicle, as the relative position; and
calculating the position of the vehicle on the road on the basis of the calculated right angle direction separation distance and the road information stored in the storage portion.

**12.** The vehicle position detecting method according to claim 11, comprising identifying a lane in which the vehicle is traveling on the basis of the calculated right angle direction separation distance and the road information including information about widths of lanes that the road and information about a separation distance between the object and the road.

**13.** An information processing device communicably connected to an in-vehicle device mounted in a vehicle via a network, the information processing device comprising a control portion acquiring photographed image data obtained by photographing an outside of the vehicle, from the in-vehicle device, calculating, when object image data that is image data of a predetermined object is included in the photographed image data, a relative position of the vehicle relative to the object on the basis of the object image data, detecting a position of the vehicle on a road on the basis of the calculated relative position and notifying the in-vehicle device of a detection result.

# FIG.1

**IN-VEHICLE NAVIGATION DEVICE** 1

**STORAGE PORTION** 12
- **MAP DATA** 121
  - **ROAD INFORMATION DATA** 1211

**TOUCH PANEL** 11
- **DISPLAY PANEL** 111
- **TOUCH SENSOR** 112

**CONTROL PORTION** 10

**VEHICLE SPEED ACQUIRING PORTION** 16

**GPS UNIT** 13

**RELATIVE BEARING DETECTING UNIT** 14

**INTERFACE** 15

**IN-VEHICLE CAMERA** 20

EP 3 279 611 A1

# FIG.2

# FIG.3

START

SA1
ACQUIRE PHOTOGRAPHED IMAGE DATA

SA2
IS OBJECT IMAGE DATA INCLUDED ?  —— NO

YES  SA3
RECOGNIZE ROAD SIGN

SA4
CALCULATE SIGN/VEHICLE DISTANCE

SA5
CALCULATE SIGN/VEHICLE ANGLE

SA6
CALCULATE RIGHT ANGLE DIRECTION SEPARATION DISTANCE

SA7
DETECT ESTIMATED CURRENT POSITION

SA8
REFER TO ROAD INFORMATION DATA

SA9
IDENTIFY CORRESPONDING RECORD

SA10
ACQUIRE ROAD SEPARATION INFORMATION AND LANE WIDTH INFORMATION

SA11
IDENTIFY TRAVELING LANE

END

# FIG.4

PHOTOGRAPHED IMAGE DATA

# FIG.5

ROAD INFORMATION DATA

| SIGN INFORMATION | | | CORRESPONDING ROAD INFORMATION | | | | | | |
|---|---|---|---|---|---|---|---|---|---|
| SIGN ID | SIGN TYPE INFORMATION | SIGN POSITION INFORMATION | LINK ID | NUMBER-OF-LANES INFORMATION | ROAD SEPARATION INFORMATION | FIRST LANE WIDTH INFORMATION | SECOND LANE WIDTH INFORMATION | ... | n-TH LANE WIDTH INFORMATION |
| J11 | J12 | J13 | J21 | J22 | J23 | J241 | J242 | | J24n |

J1 (SIGN INFORMATION)   J2 (CORRESPONDING ROAD INFORMATION)

EP 3 279 611 A1

# FIG.6

```
                    ┌─────────┐
                    │  START  │
                    └────┬────┘
                         │                          SA1
         ┌───────────────▼──────────────────┐
         │  ACQUIRE PHOTOGRAPHED IMAGE DATA  │
         └───────────────┬──────────────────┘
                         │                          SA2      NO
         ╱───────────────▼──────────────────╲──────────────┐
        ╱   IS OBJECT IMAGE DATA INCLUDED ?   ╲             │
         ╲───────────────┬──────────────────╱              │
                         │ YES                  SA3          │
         ┌───────────────▼──────────────────┐              │
         │          RECOGNIZE ROAD SIGN      │              │
         └───────────────┬──────────────────┘              │
                         │                      SB1          │
         ┌───────────────▼──────────────────┐              │
         │      CALCULATE SIGN/VEHICLE ANGLE │              │
         └───────────────┬──────────────────┘              │
                         │                      SB2          │
         ╱───────────────▼──────────────────╲              │
    ┌───╱      TRAVELED PREDETERMINED          ╲            │
    │    ╲       DISTANCE OR MORE ?            ╱             │
    │ NO  ╲───────────────┬──────────────────╱              │
    │                     │ YES                  SB3         │
    │     ┌───────────────▼──────────────────┐             │
    │     │      CALCULATE SECOND SIGN/        │             │
    │     │         VEHICLE ANGLE             │             │
    │     └───────────────┬──────────────────┘             │
    │                     │                      SB4         │
    │     ┌───────────────▼──────────────────┐             │
    │     │     CALCULATE VEHICLE TRAVELING   │             │
    │     │            DISTANCE               │             │
    │     └───────────────┬──────────────────┘             │
    │                     │                      SB5         │
    │     ┌───────────────▼──────────────────┐             │
    │     │  CALCULATE RIGHT ANGLE DIRECTION  │             │
    │     │       SEPARATION DISTANCE         │             │
    │     └───────────────┬──────────────────┘             │
    │                     │                      SA7         │
    │     ┌───────────────▼──────────────────┐             │
    │     │  DETECT ESTIMATED CURRENT POSITION│             │
    │     └───────────────┬──────────────────┘             │
    │                     │                      SA8         │
    │     ┌───────────────▼──────────────────┐             │
    │     │     REFER TO ROAD INFORMATION DATA│             │
    │     └───────────────┬──────────────────┘             │
    │                     │                      SA9         │
    │     ┌───────────────▼──────────────────┐             │
    │     │     IDENTIFY CORRESPONDING RECORD │             │
    │     └───────────────┬──────────────────┘             │
    │                     │                      SA10        │
    │     ┌───────────────▼──────────────────┐             │
    │     │ ACQUIRE ROAD SEPARATION INFORMATION│            │
    │     │     AND LANE WIDTH INFORMATION    │             │
    │     └───────────────┬──────────────────┘             │
    │                     │                      SA11        │
    │     ┌───────────────▼──────────────────┐             │
    │     │      IDENTIFY TRAVELING LANE      │             │
    │     └───────────────┬──────────────────┘             │
    │                     │                                  │
    │                    ┌▼────────┐◄──────────────────────┘
    │                    │   END   │
    │                    └─────────┘
    └─────────────────►
```

START

ACQUIRE PHOTOGRAPHED IMAGE DATA — SA1

IS OBJECT IMAGE DATA INCLUDED ? — SA2 / NO / YES

RECOGNIZE ROAD SIGN — SA3

CALCULATE SIGN/VEHICLE ANGLE — SB1

TRAVELED PREDETERMINED DISTANCE OR MORE ? — SB2 / NO / YES

CALCULATE SECOND SIGN/VEHICLE ANGLE — SB3

CALCULATE VEHICLE TRAVELING DISTANCE — SB4

CALCULATE RIGHT ANGLE DIRECTION SEPARATION DISTANCE — SB5

DETECT ESTIMATED CURRENT POSITION — SA7

REFER TO ROAD INFORMATION DATA — SA8

IDENTIFY CORRESPONDING RECORD — SA9

ACQUIRE ROAD SEPARATION INFORMATION AND LANE WIDTH INFORMATION — SA10

IDENTIFY TRAVELING LANE — SA11

END

21

# FIG.7

# FIG.8

```
                    ┌──────────┐
                    │  START   │
                    └────┬─────┘
                         │                        SC1
            ┌────────────▼──────────────┐
            │ CALCULATE SIGN/VEHICLE    │
            │ DISTANCE AND SIGN/VEHICLE │
            │         ANGLE             │
            └────────────┬──────────────┘         SC2
            ┌────────────▼──────────────┐
            │   ACQUIRE SIGN POSITION   │
            │      INFORMATION          │
            └────────────┬──────────────┘         SC3
            ┌────────────▼──────────────┐
            │ CALCULATE CURRENT POSITION│
            │     OF OWN VEHICLE        │
            └────────────┬──────────────┘         SC4
            ┌────────────▼──────────────┐
            │   CALCULATE CENTER LINE   │
            │      INFORMATION          │
            └────────────┬──────────────┘         SC5
            ┌────────────▼──────────────┐
            │   CALCULATE LENGTH OF     │
            │   PERPENDICULAR LINE      │
            └────────────┬──────────────┘         SC6
            ┌────────────▼──────────────┐
            │ ACQUIRE LANE WIDTH        │
            │    INFORMATION            │
            └────────────┬──────────────┘         SC7
            ┌────────────▼──────────────┐
            │  IDENTIFY TRAVELING LANE  │
            └────────────┬──────────────┘
                    ┌────▼─────┐
                    │   END    │
                    └──────────┘
```

# FIG.9

# FIG.10

## INTERNATIONAL SEARCH REPORT

| International application No. |
| --- |
| PCT/JP2016/058501 |

**A. CLASSIFICATION OF SUBJECT MATTER**
*G01C21/28*(2006.01)i, *G06T1/00*(2006.01)i, *G08G1/0969*(2006.01)i

According to International Patent Classification (IPC) or to both national classification and IPC

**B. FIELDS SEARCHED**

Minimum documentation searched (classification system followed by classification symbols)
G01C21/28, G06T1/00, G08G1/0969

Documentation searched other than minimum documentation to the extent that such documents are included in the fields searched
Jitsuyo Shinan Koho           1922–1996   Jitsuyo Shinan Toroku Koho   1996–2016
Kokai Jitsuyo Shinan Koho     1971–2016   Toroku Jitsuyo Shinan Koho   1994–2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2010-519550 A  (Tele Atlas North America, Inc.),<br>03 June 2010 (03.06.2010),<br>paragraphs [0013] to [0015], [0018], [0031] to [0033], [0038], [0047] to [0056], [0066], [0078] to [0082]; fig. 1 to 3, 10<br>& US 2008/0243378 A1<br>paragraphs [0026] to [0027], [0030], [0043] to [0045], [0050], [0059] to [0070], [0078], [0090] to [0094]; fig. 1 to 3, 10<br>& WO 2008/118578 A2      & EP 2132584 A<br>& CN 101641610 A          & RU 2009135019 A<br>& AU 2008231233 A | 1-2,6-9<br>3-5,10-13 |

| ☒  Further documents are listed in the continuation of Box C. | ☐  See patent family annex. |
| --- | --- |

* Special categories of cited documents:
"A"  document defining the general state of the art which is not considered    to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search<br>    23 May 2016 (23.05.16) | Date of mailing of the international search report<br>    31 May 2016 (31.05.16) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/058501

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2009-33743 A  (Delphi Technologies, Inc.), 12 February 2009 (12.02.2009), paragraphs [0007], [0030] to [0031]; fig. 4 & US 2009/0034798 A1 paragraphs [0007], [0030] to [0031]; fig. 4 & EP 2023265 A1 | 3-5,10-12 |
| Y | JP 4-163251 A  (Oki Electric Industry Co., Ltd.), 08 June 1992 (08.06.1992), page 2, lower right column, line 1 to page 3, lower left column, line 18; fig. 1, 2 (Family: none) | 4-5,11-12 |
| Y | JP 2014-203115 A  (Pioneer Corp.), 27 October 2014 (27.10.2014), paragraphs [0076] to [0082]; fig. 12 (Family: none) | 13 |
| A | US 2013/0261838 A1  (GENTEX CORP.), 03 October 2013 (03.10.2013), paragraphs [0019] to [0021], [0025] to [0028]; fig. 2, 4A to 5 & WO 2013/148456 A1      & EP 2830926 A & CN 104185588 A | 1-13 |
| A | WO 2014/166532 A1  (HARMAN BECKER AUTOMOTIVE SYSTEMS GMBH), 16 October 2014 (16.10.2014), page 5, line 33 to page 15, line 11; fig. 1 to 9 & EP 2984451 A          & CN 104884898 A | 1-13 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006189325 A